# FASCICULE DE BREVET EUROPEEN

(11) **EP 1 674 250 B1**
(45) Date de publication et mention de la délivrance du brevet: **10.12.2008**
(21) Numéro de dépôt: 05112437.8
(22) Date de dépôt: 20.12.2005
(51) Int. Cl.: B29D 30/26, B29D 30/24

(54) **Tambour de conformation des nappes d'armature sommet**
Aufbautrommel für Reifengürtel
Building drum for tire belts

(30) Priorité: 24.12.2004 FR 0413955
(43) Date de publication de la demande: 28.06.2006
(73) Titulaire: Société de Technologie Michelin, 63000 Clermont-Ferrand (FR); Michelin Recherche et Technique S.A., 1763 Granges-Paccot (CH)
(72) Inventeur: Auclair, Jacques, 63800 Cournon d'Auvergne (FR)
(74) Mandataire: Bauvir, Jacques

(56) Documents cités:
- EP-A- 0 862 986
- US-A1- 2001 000 582
- US-A1- 2003 051 816
- PATENT ABSTRACTS OF JAPAN vol. 2000, no. 25, 12 avril 2001 (2001-04-12) & JP 2001 212889 A (BRIDGESTONE CORP), 7 août 2001 (2001-08-07)
- PATENT ABSTRACTS OF JAPAN vol. 1995, no. 04, 31 mai 1995 (1995-05-31) & JP 07 001603 A (BRIDGESTONE CORP), 6 janvier 1995 (1995-01-06)

## Description

L'invention concerne un tambour à diamètre variable de forme généralement cylindrique selon le préambule de la revendication 1 et un procédé d'assemblage d'un pneumatique selon le préambule de la revendication 6. Ces ceintures de renfort sommet sont usuellement composées d'une ou plusieurs nappes empilées les unes sur les autres. Chacune de ces nappes est formée à partir de câbles parallèles entre eux et enrobés dans un mélange de nature caoutchoutique. Ces câbles forment un angle donné avec la direction circonférentielle du pneumatique. Les câbles peuvent être constitués d'un ou plusieurs torons, eux-mêmes formés à partir de fils unitaires textiles ou plus généralement métalliques dans le cas des nappes de renfort sommet.

Afin de conférer au pneumatique les qualités attendues, les ceintures de renfort sont généralement constituées d'au moins deux nappes dont les câbles forment, par rapport à la direction circonférentielle, des angles ayant des signes opposés, et des valeurs absolues proches l'une de l'autre mais pas nécessairement identiques. Une fois mises en place ces nappes créent une triangulation avec les nappes de l'armature carcasse dont les câbles font généralement un angle de 90° avec la direction longitudinale.

Selon les procédés de fabrication couramment employés dans l'industrie du pneumatique, la pose des nappes de renfort sommet s'effectue après avoir conformé la carcasse obtenue dans un premier stade, c'est-à-dire après avoir conféré une forme torique à l'ébauche de pneumatique de forme sensiblement cylindrique. Ladite carcasse comprend, en général, une nappe de renfort carcasse ancrée à ses deux extrémités à des anneaux de renfort du bourrelet.

Les nappes de ceinture sont posées lorsque le diamètre de l'ébauche est proche du diamètre définitif de l'enveloppe. Ce diamètre est calculé pour permettre l'emboîtage en presse de vulcanisation de ladite ébauche finale.

Une autre méthode consiste à réaliser l'ensemble du sommet sur une forme cylindrique dite forme sommet, dont le diamètre est également proche du diamètre définitif, et sur laquelle sont déposées successivement les nappes de renfort sommet et les profilés constituant la partie sommet de l'enveloppe et comprenant entre autre la bande de roulement. Le sommet achevé est alors transféré par un anneau de transfert sur la carcasse qui, en se conformant, vient adhérer à la partie interne du sommet.

D'autre part, et toujours dans le but d'améliorer la performance des pneumatiques il a été mis en évidence l'intérêt de réaliser des nappes sommets dont les câbles de renfort ont des angles variables sur leur longueur. Plus particulièrement, l'angle des renforts par rapport à la direction longitudinale est plus faible au centre, que sur les bords de la nappe. Cette disposition en S a pour effet de faciliter la mise à plat du pneumatique en améliorant le confort et la stabilité, et de réduire les phénomènes d'usure en bord de nappe. Ce type de pneumatique est décrit à titre d'exemple dans le brevet FR 2 037 520 ou encore dans le brevet EP 312 300.

Les mécanismes liés à la triangulation des nappes sont largement connus de l'homme du métier, et font l'objet de nombreuses publications, parmi lesquelles on citera la publication FR 2 797 213 de la demanderesse. Sont également connus de l'état de la technique des tambours de conformation comportant des moyens de maintien de la nappe pendant la conformation, tels que des moyens de succion connectés à des pompes à vides. Ces moyens sont décrits à titre d'exemple dans le document EP 862 986 qui servira de base au préambule des revendications indépendantes, dans les documents US 2001/000582 A1, US 051816 A1, JP 2001 212889, ou encore dans le document JP 07 001603 dans lequel les moyens de succion sont reliés à une rampe permettant de faire le vide ou de souffler de l'air pour améliorer le décollement du produit placé sur la surface du tambour au moment de l'extraction. Toutefois, aucun de ces documents ne traite pas le problème de la conformation à angle variable.

Un procédé de réalisation de cette forme particulière de ceinture sommet est exposé dans le brevet précité FR 2 037 520. Il consiste à déposer deux nappes de renfort sommet l'une sur l'autre, à les faire adhérer fortement sur toute leur longueur et sur une partie de leur largeur et à étirer l'ensemble dans la direction longitudinale. Une variante de ce procédé consiste à inclure un élément séparateur sur une partie de la largeur, de manière à permettre le glissement des nappes et à délimiter les zones du bord de nappe dans lesquelles on désire procéder à cette modification d'angle. Une fois stabilisée, la nappe est posée directement sur la carcasse du pneumatique préalablement galbée à sa forme torique.

On observera que ce procédé nécessite d'assembler les nappes sur un poste indépendant, mais également que la réalisation de la jonction des deux extrémités de l'assemblage ainsi réalisé peut s'avérer malcommode en raison de la superposition de nappes présentant des angles différents.

Le procédé décrit dans la demande FR 2 797 213 permet de réaliser un sommet présentant les caractéristiques exposées ci-dessus, mais il s'accompagne de la déradialisation de la nappe de renfort carcasse sous la zone sommet.

L'invention faisant l'objet de la présente demande concerne un procédé et un dispositif permettant de réaliser un assemblage sur une forme sommet des nappes de renfort sommet dont les câbles forment sur leur longueur des angles variables avec la direction circonférentielle, tout en maîtrisant précisément la géométrie et la position sur le tambour de pose de l'anneau ainsi obtenu.

A cet effet, selon l'invention il est proposé un tambour défini dans la revendication 1 et un procédé défini dans la revendication 6. Des formes variantes préférées de l'invention font l'objet des revendications dépendantes.

L'assemblage des nappes de ceinture sommet se fait en positionnant le tambour à un premier diamètre. On dépose la première nappe de renfort de ceinture sommet dont les câbles de renfort font un angle donné avec la direction circonférentielle, tout en activant les premiers et deuxièmes moyens de manière à faire adhérer l'ensemble de la nappe sur la surface du tambour.

On dépose alors la seconde nappe de ceinture sommet, composée de câbles de renfort faisant avec la direction circonférentielle un angle donné de signe opposé à l'angle des renforts formant la première nappe. On fait alors adhérer fortement la seconde nappe sur la première nappe.

Tout en maintenant les premiers moyens dans la configuration précédente, on active les deuxièmes moyens de manière à permettre le glissement de la première nappe au droit desdits seconds moyens, et on positionne le tambour à un deuxième diamètre supérieur au premier diamètre.

Il a été mis en évidence que, pour conserver un alignement précis de l'axe des nappes avec la direction circonférentielle, il était nécessaire de maintenir fermement cette partie centrale pendant l'opération de conformation tout en favorisant le glissement des parties situées de part et d'autre de cet axe de manière à permettre la triangulation des nappes entraînant une variation de leur largeur et de l'angle des câbles qui les composent.

Ainsi tout se passe comme si chaque câble effectuait un mouvement de rotation autour de sa partie centrale, ladite partie centrale étant maintenue fermement en position sur la surface du tambour par lesdits premiers moyens. Par ailleurs, le glissement libre des parties latérales favorise la triangulation des nappes de manière homogène et reproductible sur l'ensemble de la circonférence du tambour.

Il devient donc aisé de poursuivre la finition du sommet de l'enveloppe en déposant le reste des produits constituant le dit sommet sur le même tambour. Ces produits peuvent comprendre d'autres nappes de renfort sommet pouvant former un angle éventuellement nul avec la direction circonférentielle mais également des profilés caoutchoutiques parmi lesquels figure la bande de roulement du pneumatique.

Il n'est donc pas nécessaire de réaliser la triangulation des nappes de renfort sommet sur un moyen différent de celui sur lequel est réalisé la confection du sommet. Par ailleurs la mise en oeuvre de ce dispositif s'avère particulièrement intéressante pour maîtriser avec précision la position géométrique des produits constituant le sommet les uns par rapport aux autres, mais également par rapport à une référence prise sur le tambour.

La réalisation finale du pneumatique se fait alors de manière tout à fait classique en saisissant le sommet ainsi réalisé à l'aide d'un anneau de transfert et en le déposant sur la carcasse conformée.

Un tambour conforme à l'invention est décrit sommairement ci après en référence aux figures dans lesquelles
- la figure 1 représente une vue schématique de face d'un tambour conforme à l'invention positionné à son premier diamètre,
- la figure 2 représente une vue schématique de face d'un tambour conforme à l'invention positionné à son second diamètre,
- la figure 3 représente une vue schématique en perspective du tambour positionné à son premier diamètre,
- la figure 4 représente une vue schématique en perspective du tambour positionné à son second diamètre,
- la figure 5 représente une vue de face d'un tambour à son premier diamètre sur lequel ont été déposées des nappes de renfort sommet,
- la figure 6 représente une vue de face d'un tambour à son second diamètre sur lequel ont été déposées des nappes de renfort sommet,
- les figures 7 à 9 représentent en vue schématique les principales phases de fonctionnement des moyens de maintien.

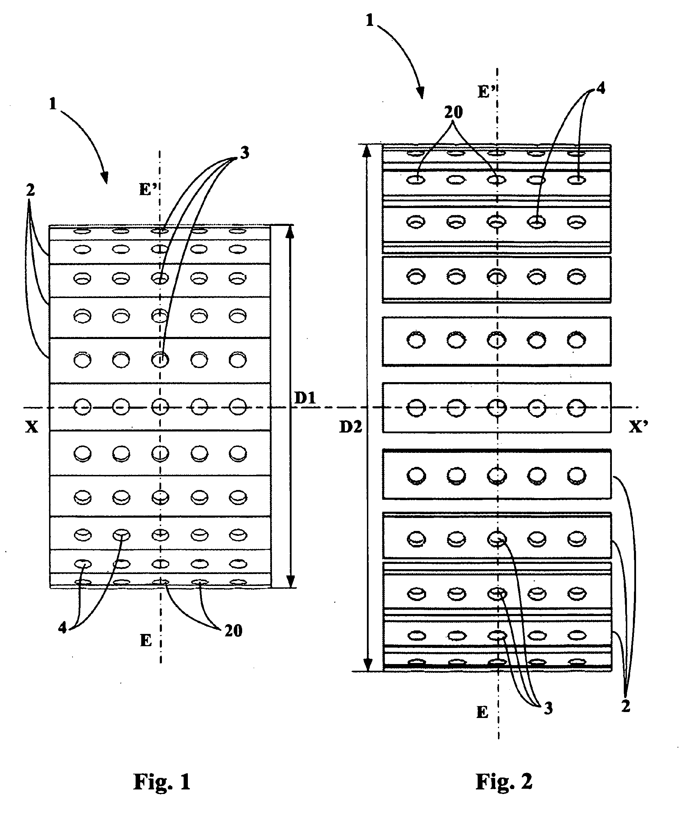

Le tambour 1 représenté sur la figure 1 comprend un ensemble d'éléments 2 arrangés de façon équidistante à un axe de rotation XX'. Ces éléments sont mobiles radialement et permettent de faire varier la surface sensiblement cylindrique du tambour depuis un premier diamètre D1 à un second diamètre D2.

Chaque élément 2 porte dans sa direction axiale des logements 20, dans lesquels sont placés respectivement les premiers moyens de maintien 3, et les seconds moyens de maintien 4.

Les premiers moyens de maintien 3 sont disposés axialement au milieu de chacun des éléments 2, ce qui permet de former un ensemble de premier moyens de maintien disposés circonférentiellement sur l'équateur EE' du tambour 1. L'équateur se définit comme étant l'intersection d'un plan perpendiculaire à l'axe de rotation XX' du tambour et passant axialement au milieu de la surface du tambour, avec le cylindre formé par la surface dudit tambour.

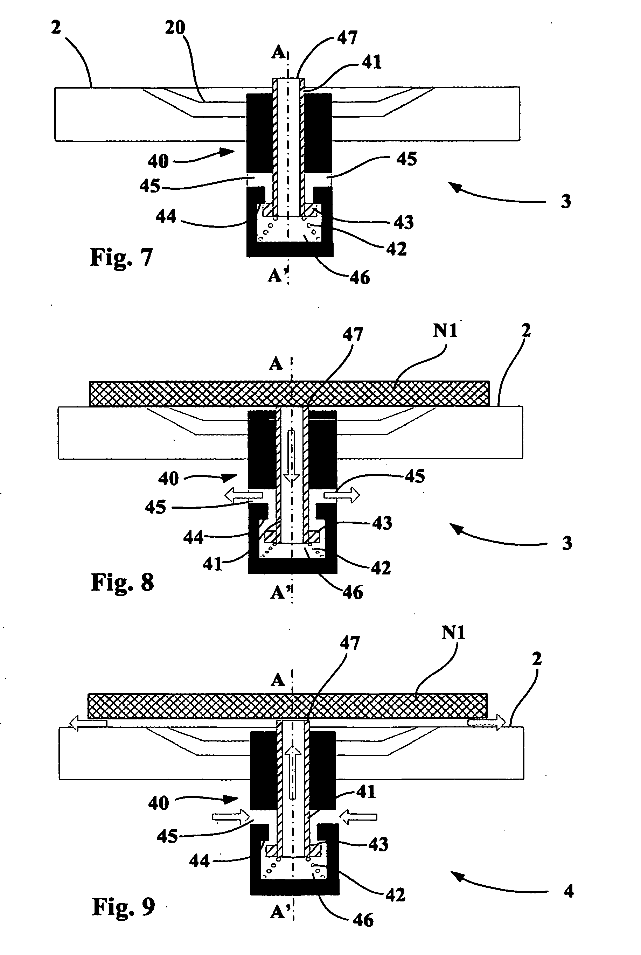

Un exemple de réalisation de premier moyen de maintien 3 est représenté sur la figure 7 et peut s'assimiler à un clapet pneumatique 40. Le corps du clapet 40, d'axe AA' sensiblement radial, est disposé dans le logement 20 de l'élément 2. Le corps du clapet 40 comporte une série d'orifices 45 placés sur sa partie latérale. Les orifices communiquent avec une chambre 46.

Le corps du clapet contient une soupape tubulaire 41 coulissant selon le même axe AA' et comportant à chacune de ses extrémités respectivement un siège 43 et une sortie 47. Le siège de la soupape 43 repose sur la portée 44 sous l'action du ressort 42, et empêche le passage de l'air entre les orifices 45 et la chambre 46. Le corps de la soupape 41 comporte un conduit mettant en communication la chambre 46 et la sortie 47. La sortie 47 est disposée de manière à être radialement légèrement à l'extérieur du plan formé par la surface de l'élément 2. Les orifices 45 sont connectés à une source de vide (non visualisée).

Ainsi, comme cela est schématisé à la figure 8, en déposant une nappe N1 sur la surface de l'élément 2 on rentre la soupape 41 en la repoussant radialement vers l'intérieur. Cette action a pour effet de décoller le siège 43 de la soupape de sa portée 44, et de mettre en communication la chambre 46 et les orifices 45, ce qui provoque une dépression au niveau de la sortie 47 de la soupape. Les flèches portées sur la figure 8 permettent de visualiser la circulation de l'air. Il en résulte une force d'adhésion par dépression qui vient plaquer la nappe à la surface du tambour, la privant de toute possibilité de déplacement au droit du voisinage immédiat de la sortie 47.

Les seconds moyens sont semblables aux premiers moyens. Ils sont disposés axialement de part et d'autre de l'équateur EE'. Ils diffèrent néanmoins des premiers moyens 3, en ce que les orifices 45 peuvent être connectés alternativement à une source de vide et fonctionner comme des ventouses, comme cela a été exposé précédemment, ou à une source d'air sous pression. Dans ce deuxième cas, le fonctionnement des seconds moyens, est illustré à la figure 9.

La soupape 41 est maintenue en position rentrée par l'action de la nappe N1 sur la sortie 47. L'air peut alors circuler librement dans le sens des flèches depuis les orifices 45 vers la sortie 47. Il en résulte la création d'un mince coussin d'air entre la surface de l'élément 2 et la nappe N1 qui a pour effet de favoriser le glissement de la nappe sur la surface du tambour située dans le voisinage immédiat de la sortie 47.

Le tarage du ressort 42 et de la pression d'air à l'entrée des orifices 45 est ajusté de manière à permettre la fermeture de la communication entre la chambre 46 et les orifices 45 lorsque l'on enlève la nappe N1.

La réalisation de premiers moyens et de seconds moyens à partir de clapets pneumatiques s'avère particulièrement simple à mettre en oeuvre. Toutefois il n'est pas exclu de considérer des premiers moyens de nature électromagnétique qui peuvent s'avérer particulièrement performants lorsque les nappes de ceinture du sommet sont des nappes métalliques.

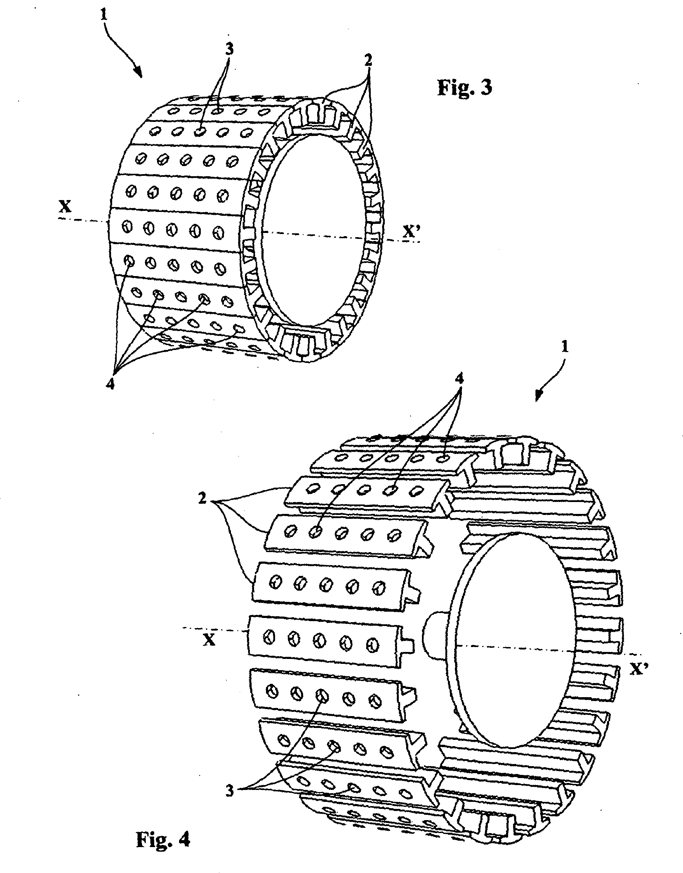

La figure 2 représente le tambour 1 positionné à son diamètre D2, et les figures 3 et 4 représentent le tambour 1 aux diamètres D1 et D2 en vue perspective. Les mécanismes commandant le mouvement radial des éléments 2, ainsi que les moyens permettant de supporter et de mettre en rotation le tambour autour de l'axe XX', sont largement connus de l'homme du métier et ne font pas l'objet de la présente description, ils ne sont donc pas représentés sur les figures.

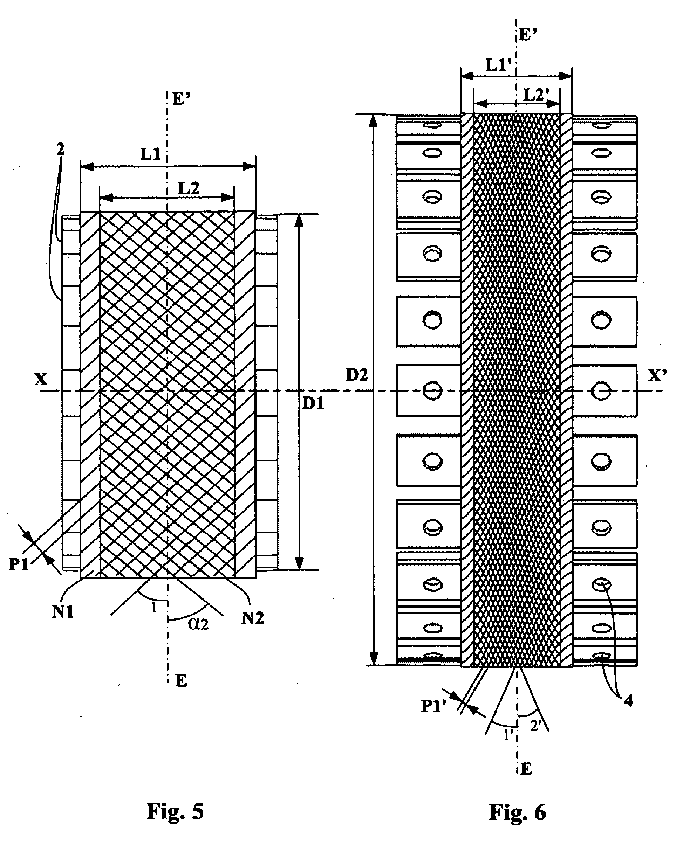

Les figures 5 et 6 permettent d'illustrer, en vue schématique, les étapes de la conformation d'une ceinture de renfort sommet composée de deux nappes N1 et N2 respectivement de largeur L1 et L2, L2 étant généralement inférieure à L1. Les câbles de renfort composant les nappes font des angles αl et α2, de signes opposés, avec la direction circonférentielle.

Le tambour 1 est positionné à un premier diamètre D1 et les orifices 45 des seconds moyens sont connectés à une prise de vide. En déposant la première nappe de renfort N1, on repousse radialement les sorties 47 des soupapes 41, ce qui a pour effet, comme on l'a vu précédemment, de maintenir la nappe N1 fermement en position sur la surface du tambour 1. On fait également en sorte de faire coïncider le centre de la nappe avec l'équateur EE' de manière à assurer l'alignement géométrique des constituants du pneumatique par rapport à une référence connue.

On dépose alors une seconde nappe N2. De manière à ce que la triangulation des nappes s'opère conformément aux lois géométriques exposées à titre d'exemple dans le document FR 2 797 213 déjà cité, il convient de faire adhérer fortement les deux nappes l'une sur l'autre. On remarquera que le maintien des nappes en position sur la surface du tambour pendant cette opération est un moyen de préserver l'alignement géométrique conféré au moment de la pose de nappes.

Cette opération achevée, il est alors possible d'activer les seconds moyens dans la configuration permettant de faire glisser la nappe sur la surface du tambour en mettant les orifices 45 des seconds moyens en communication avec une source d'air sous pression. Les premiers moyens restent dans la position précédente, de manière à maintenir fermement les parties de la ceinture de renfort sommet situées au droit de l'équateur EE' au contact du tambour et d'empêcher tout mouvement de la ceinture au droit des premiers moyens. Le bon maintien de la ceinture le long de la circonférence centrale EE' du tambour permet de conserver l'alignement géométrique des nappes par rapport à une référence fixe sur le tambour 1.

En portant le diamètre du tambour au diamètre D2, on provoque la triangulation des nappes dont la largeur passe respectivement de L1 à L1' et de L2 à L2'. Les angles α1 et α2 formés par les câbles avec la direction circonférentielle à l'équateur passent respectivement aux valeurs α1' et α2' respectivement inférieures à α1 et α2. Ces valeurs α1' et α2' sont sensiblement constantes sur la longueur des câbles mais on observe que ces angles augmentent fortement à chacune des extrémités des câbles dans la zone de bordure des nappes N1 et N2 pour donner une forme en S aux câbles des nappes. En pratique l'écart entre l'angle formé par un câble avec la direction circonférentielle à ses extrémités peut varier de 2° à 15° par rapport à l'angle que fait le même câble avec la direction circonférentielle au centre de la nappe.

Une fois réalisé la conformation de la ceinture, on poursuit l'assemblage du reste des composants formant le sommet du pneumatique de manière conventionnelle.

On observe également que le pas des câbles se resserre. En d'autres termes la distance entre deux câbles consécutifs et sensiblement parallèles entre eux diminue pendant la phase de conformation des nappes. Et ce phénomène est plus marqué au centre que sur les bords de nappe.

Le dispositif, tel qu'il vient d'être décrit, permet de tirer un parti avantageux de ce phénomène connu. En effet, en diminuant le pas et en augmentant la densité de câble au centre, on augmente la rigidité de flexion du sommet et on améliore la durée de vie sur usure du pneumatique.

Cela permet également d'ajuster le pas des nappes au juste nécessaire. En effet, à partir d'une nappe N1 ayant un pas donné P1 il est possible de réaliser des ceintures ayant une infinité de pas en modifiant le taux de conformation. Le taux de conformation est égal au rapport entre le deuxième D2 et le premier diamètre D1. En pratique le taux de conformation peut varier entre 1,03 et 1,5.

Ainsi, connaissant le pas P1 de la nappe N1, l'angle α1', la largeur L1', le pas P1' final de la nappe N1 (ou la densité de câbles que l'on désire obtenir au centre du pneumatique) et le diamètre final D2, il est facile d'ajuster en conséquence la largeur L1, l'angle α1, et le diamètre de pose D1. En pratique on peut obtenir un pas P1' compris entre P1 et 0.75*P1.

Ce mode de mise en oeuvre, permet tout à la fois de simplifier la complexité industrielle en diminuant le nombre de référence de nappes de pas P1 différents, et de donner une marge de manoeuvre supplémentaire pour le choix de câbles qu'il devient possible de sélectionner parmi des câbles de diamètre inférieur et dont on autorise l'usage en augmentant la densité par conformation, selon le procédé faisant l'objet de l'invention, de manière à obtenir une résistance structurelle semblable à celle que l'on aurait obtenue avec des câbles plus résistants et d'un pas supérieur.

## Revendications

1. Tambour (1) à diamètre variable de forme généralement cylindrique, destiné à l'assemblage des nappes de ceinture (N1, N2) et des profilés constituant le sommet d'un pneumatique, comprenant un ensemble de premier moyens de maintien (3) disposés circonférentiellement à l'équateur du tambour (EE') et adaptés pour faire adhérer sur le tambour la partie de la nappe (N1) disposée au droit de ces moyens en créant une dépression ou un champ électromagnétique, et
**caractérisé en ce qu'**il comporte un ensemble de deuxième moyens (4) et disposés circonférentiellement et axialement de part et d'autre de l'équateur EE' sur l'ensemble de la surface dudit tambour (1) et pouvant créer une dépression ou fournir de l'air sous pression, de manière alternativement à faire adhérer ou faire glisser librement sur le tambour (1) la partie de la nappe placée au droit desdits deuxièmes moyens (4).

2. Tambour selon la revendication 1, dans lequel les premiers moyens (3) sont formés par des clapets pneumatiques débouchant à la surface externe dudit tambour (1) et connectés à une prise de vide.

3. Tambour selon la revendication 1 dans lequel les premiers moyens (3) sont formés par des électroaimants.

4. Tambour selon la revendication 1, dans lequel les seconds moyens (4) sont formés par des clapets pneumatiques débouchant à la surface externe dudit tambour et pouvant être alternativement connectés à une prise de vide où à une conduite fournissant de l'air sous pression.

5. Tambour selon l'une des revendications 1 à 4, formé par l'assemblage d'un nombre déterminé d'éléments (2) mobiles radialement, sur lesquels lesdits premiers moyens (3) sont placé axialement au milieu du dit élément et lesdits deuxièmes moyens (4) sont placés axialement de part et d'autre desdits premiers moyens (3).

6. Procédé d'assemblage d'un pneumatique, comprenant une étape séparée de réalisation du sommet dudit pneumatique sur un tambour à diamètre variable (1) de forme généralement cylindrique, ledit tambour comprenant un ensemble de premier moyens de maintien (3) disposés circonférentiellement à l'équateur (EE') dudit tambour et adaptés pour faire adhérer sur le tambour (1) la partie de la nappe disposée au droit de ces moyens en créant une dépression ou un champ électromagnétique, et comportant un ensemble de deuxièmesmoyens de maintien (4) disposés circonférentiellement et axialement de part et d'autre de l'équateur (EE') sur l'ensemble de la surface dudit tambour (1), et pouvant créer une dépression ou fournir de l'air sous pression pour alternativement faire adhérer ou faire glisser librement sur le tambour la partie de la nappe placée au droit desdits deuxièmes moyens (4), comprenant les étapes suivantes :
- positionner le tambour (1) à un premier diamètre (D1),
- déposer une première nappe de ceinture sommet (N1) composée de câbles de renfort enrobés dans un mélange caoutchouteux faisant un angle donné α1 avec la direction circonférentielle, en activant les premiers et les deuxièmes moyens de manière à faire adhérer l'ensemble de la nappe sur la surface du tambour,
- déposer une seconde nappe de ceinture sommet (N2), composée de câbles de renfort enrobés dans un mélange caoutchouteux faisant avec la direction circonférentielle un angle α2 donné de signe opposé à l'angle α1,
- faire adhérer la seconde nappe (N2) sur la première nappe (N1),
- positionner le tambour à un deuxième diamètre (D2) supérieur au premier diamètre (D1),
- déposer les autres nappes et les autres produits profilés constituant le sommet du pneumatique,
- saisir le sommet ainsi constitué avec un anneau de transfert et déposer le sommet sur une ébauche de pneumatique de forme toroïdale,
**caractérisé en ce que** l'étape au cours de laquelle le tambour passe du premier diamètre (D1) au second diamètre (D2) s'effectue en maintenant les premier moyens (3) de manière à faire adhérer sur le tambour les parties de la première nappe (N1) disposées au droit desdits premier moyens (3) et en activant les deuxième moyens (4) de manière à permettre le glissement de la première nappe (N1) au droit desdits deuxième moyens (4), et **en ce que**, une fois le tambour (1) placé au second diamètre (D2), les deuxième moyens (4) sont activés de manière à faire adhérer à la surface du tambour (1) les parties de la première nappe (N1) placées au droit desdits deuxième moyens (4).

7. Procédé d'assemblage selon la revendication 6, dans lequel le taux de conformation, égal au rapport entre le deuxième diamètre D2 et le premier diamètre D1, est compris entre 1,03 et 1,5.

8. Procédé d'assemblage selon la revendication 7, dans lequel l'angle formé par un câble à ses deux extrémités avec la direction circonférentielle est supérieur à l'angle formé par le même câble avec la direction circonférentielle dans sa partie centrale.

9. Procédé d'assemblage selon la revendication 8, dans lequel l'angle formé par un câble à ses deux extrémités avec la direction circonférentielle est supérieur de 2° à 15° à l'angle formé par le même câble avec la direction circonférentielle dans sa partie centrale.

## Claims

1. A drum (1) of variable diameter of generally cylindrical form, intended for assembly of the belt plies (N1, N2) and profiled elements constituting the crown of a tyre, comprising a set of first holding means (3) arranged circumferentially at the equator of the drum (EE') and suitable for making that part of the ply (N1) arranged level with these means adhere to the drum by creating suction or an electromagnetic field, and
**characterised in that** it comprises a set of second means (4) arranged circumferentially and axially on either side of the equator (EE') over the entire surface of said drum (1), and capable of creating suction or of supplying pressurised air in order to cause that part of the ply that is positioned level with said second means (4) to adhere to and, alternately to slide freely on, the drum (1).

2. A drum according to Claim 1, in which the first means (3) are formed by tyre valves opening on to the outer surface of said drum (1) and connected to a vacuum connection.

3. A drum according to Claim 1, in which the first means (3) are formed by electromagnets.

4. A drum according to Claim 1, in which the second means (4) are formed by tyre valves opening on to the outer surface of said drum and which are able to be connected alternately to a vacuum connection or to a pipe supplying pressurised air.

5. A drum according to one of Claims 1 to 4, formed by assembling a given number of radially mobile elements (2), on which said first means (3) are placed axially in the middle of said element and said second means (4) are placed axially on either side of said first means (3).

6. A process for assembling a tyre, comprising a separate step of producing the crown of said tyre on a drum of variable diameter (1) of generally cylindrical form, said drum comprising a set of first holding means (3) arranged circumferentially at the equator (EE') of said drum and suitable for making that part of the ply arranged level with these means adhere to the drum (1) by creating suction or an electromagnetic field, and comprising a set of second holding means (4) arranged circumferentially and axially on either side of the equator (EE') over the entire surface of said drum (1), and capable of creating suction or of supplying pressurised air in order to cause that part of the ply that is positioned level with said second means (4) to adhere to and, alternately to slide freely on, the drum, and comprising the following steps:
- positioning the drum (1) at a first diameter (D1),
- depositing a first crown belt ply (N1) composed of reinforcement cables coated in a rubber mix forming a given angle α1 with the circumferential direction, by activating the first and second means so as to make the entire ply adhere to the surface of the drum,
- depositing a second crown belt ply (N2) composed of reinforcement cables coated in a rubber mix forming a given angle α2 of opposite sign to the angle α1 with the circumferential direction,
- making the second ply (N2) adhere to the first ply (N1),
- positioning the drum at a second diameter (D2) greater than the first diameter (D1),
- depositing the other plies and the other profiled products constituting the crown of the tyre,
- gripping the crown thus produced with a transfer ring and depositing the crown on a tyre blank of toroidal form,
**characterised in that** the step in which the drum changes from the first diameter (D1) to the second diameter (D2) is performed while keeping the first means (3) in such a condition as to make those parts of the first ply (N1) that are positioned level with said first means (3) adhere to the drum and activating the second means (4) in such a way as to allow the first ply (N1) level with said second means (4) to slide, and **in that** once the drum (1) is at the second diameter (D2), the second means (4) are activated in such a way as to make those parts of the first ply (N1) that are positioned level with said second means (4) adhere to the surface of the drum (1).

7. An assembly process according to Claim 6, in which the shaping ratio, which is equal to the ratio between the second diameter D2 and the first diameter D1, is of between 1.03 and 1.5.

8. An assembly process according to Claim 7, in which the angle formed with the circumferential direction by a cable at its two ends is greater than the angle formed with the circumferential direction by the same cable in its central part.

9. An assembly process according to Claim 8, in which the angle formed with the circumferential direction by a cable at its two ends is greater by 2° to 15° than the angle formed with the circumferential direction by the same cable in its central part.

## Patentansprüche

1. Trommel (1) mit veränderlichem Durchmesser und im Allgemeinen zylindrischer Form, die für die Zusammenfügung von Gürtellagen (N1, N2) und von Profilen, die die Lauffläche eines Luftreifens bilden, bestimmt ist, mit einer Gesamtheit erster Haltemittel (3), die in Umfangsrichtung am Äquator der Trommel (EE') angeordnet und dazu ausgelegt sind, zu bewirken, dass der Teil der Lage (N1), der auf diesen Mitteln angeordnet ist, an der Trommel haftet, indem sie einen Unterdruck oder ein elektromagnetisches Feld erzeugen, und
**dadurch gekennzeichnet, dass** sie eine Gesamtheit zweiter Mittel (4) enthält, die in Umfangsrichtung und axial beiderseits des Äquators (EE') auf der gesamten Oberfläche der Trommel (1) angeordnet sind und einen Unterdruck erzeugen können oder Druckluft liefern können, derart, dass der Teil des Mantels, der auf diesen zweiten Mitteln (4) angeordnet ist, abwechselnd anhaftet oder frei gleiten kann.

2. Trommel nach Anspruch 1, wobei die ersten Mittel (3) durch Luftventile gebildet sind, die in die äußere Oberfläche der Trommel (1) münden und mit einem Unterdruckanschluss verbunden sind.

3. Trommel nach Anspruch 1, wobei die ersten Mittel (3) durch Elektromagneten gebildet sind.

4. Trommel nach Anspruch 1, wobei die zweiten Mittel (4) durch Luftklappenventile gebildet sind, die in die äußere Oberfläche der Trommel münden und abwechselnd mit einem Unterdruckanschluss oder mit einer Leitung, die Druckluft liefert, verbunden werden können.

5. Trommel nach einem der Ansprüche 1 bis 4, die durch die Zusammenfügung einer bestimmten Anzahl von radial beweglichen Elementen (2) gebildet ist, auf denen die ersten Mittel (3) axial in der Mitte des Elements angeordnet sind und die zweiten Mittel (4) axial beiderseits dieser ersten Mittel (3) angeordnet sind.

6. Verfahren zum Herstellen eines Luftreifens, mit einem eigenen Schritt für die Ausbildung der Lauffläche des Luftreifens auf einer Trommel mit veränderlichem Durchmesser (1) und im Allgemeinen zylindrischer Form, wobei die Trommel eine Gesamtheit erster Haltemittel (3), die in Umfangsrichtung auf dem Äquator (EE') der Trommel angeordnet und dazu ausgelegt sind, zu bewirken, dass der Teil der Lage, der auf diesen Mitteln angeordnet ist, auf der Trommel (1) anhaftet, indem sie einen Unterdruck oder ein elektromagnetisches Feld erzeugen, und eine Gesamtheit zweiter Haltemittel (4), die in Umfangsrichtung und axial beiderseits des Äquators (EE') auf der gesamten Oberfläche der Trommel (1) angeordnet sind und einen Unterdruck erzeugen oder Druckluft liefern können, um abwechselnd zu bewirken, dass der Teil der Lage, der auf diesen zweiten Mitteln (4) angeordnet ist, auf der Trommel haftet oder darauf frei gleitet, enthält, wobei das Verfahren die folgenden Schritte umfasst:
- Einstellen der Trommel (1) auf einen ersten Durchmesser (D1),
- Anordnen einer erster Laufflächen-Gürtellage (N1), die aus umwickelten Verstärkungskordfäden in einem Kautschukgemisch gebildet ist, die mit der Umfangsrichtung einen gegebenen Winkel α1 bilden, indem die ersten und die zweiten Mittel in der Weise aktiviert werden, dass die gesamte Lage auf der Oberfläche der Trommel haftet,
- Anordnen einer zweiten Laufflächen-Gürtellage (N2), die aus umwickelten Verstärkungskordfäden in einem Kautschukgemisch gebildet ist, die mit der Umfangsrichtung einen gegebenen Winkel α2 mit zum Winkel α1 entgegengesetztem Vorzeichen bilden,
- Bewirken, dass die zweite Lage (N2) auf der ersten Lage (N1) haftet,
- Einstellen der Trommel auf einen zweiten Durchmesser (D2), der größer ist als der erste Durchmesser (D1),
- Anordnen der anderen Lagen und der anderen Profilprodukte, die die Lauffläche des Luftreifens bilden,
- Umgreifen der auf diese Weise gebildeten Lauffläche mit einem Übertragungsring und Anordnen der Lauffläche auf einem toroidförmigen Luftreifenrohling,
**dadurch gekennzeichnet, dass** der Schritt, in dessen Verlauf die Trommel vom ersten Durchmesser (D1) zum zweiten Durchmesser (D2) übergeht, **dadurch** ausgeführt wird, dass die ersten Mittel (3) so gehalten werden, dass bewirkt wird, dass die Teile der ersten Lage (N1), die auf den ersten Mitteln (3) angeordnet sind, an der Trommel haften, und dass die zweiten Mittel (4) in der Weise aktiviert werden, dass das Gleiten der ersten Lage (1) auf diesen zweiten Mitteln (4) ermöglicht wird, und dass, sobald die Trommel (N1) auf den zweiten Durchmesser (D2) eingestellt ist, die zweiten Mittel (4) in der Weise aktiviert werden, dass bewirkt wird, dass die Teile der ersten Lage (N1), die auf diesen zweiten Mitteln (4) angeordnet sind, auf der Oberfläche der Trommel (1) haften.

7. Zusammenfügungsverfahren nach Anspruch 6, wobei der Formgebungsanteil, der gleich dem Verhältnis zwischen dem zweiten Durchmesser (D2) und dem ersten Durchmesser (D1) ist, im Bereich von 1,03 bis 1,5 liegt.

8. Zusammenfügungsverfahren nach Anspruch 7, wobei der Winkel, der von einem Kordfaden an seinen beiden Enden mit der Umfangsrichtung gebildet wird, größer ist als der Winkel, der vom selben Kordfaden in seinem Mittelteil mit der Umfangsrichtung gebildet wird.

9. Zusammenfügungsverfahren nach Anspruch 8, wobei der Winkel, der durch einen Kordfaden an seinen beiden Enden mit der Umfangsrichtung gebildet wird, um 2° bis 15° größer ist als der Winkel, der vom selben Kordfaden in seinem Mittelteil mit der Umfangsrichtung gebildet wird.
